# EUROPEAN PATENT SPECIFICATION

(11) **EP 3 115 344 B1**
(45) Date of publication and mention of the grant of the patent: **26.12.2018**
(21) Application number: 15759142.1
(22) Date of filing: 12.02.2015
(51) Int. Cl.: C03B 37/012, G02B 6/02, G02B 6/04, G02B 6/06

(54) **PRODUCTION METHOD FOR OPTICAL FIBER PREFORM, AND PRODUCTION METHOD FOR OPTICAL FIBER**
HERSTELLUNGSVERFAHREN FÜR GLASFASERVORFORM UND HERSTELLUNGSVERFAHREN FÜR GLASFASER
PROCÉDÉ DE FABRICATION D'UNE PRÉFORME DE FIBRE OPTIQUE, ET PROCÉDÉ DE PRODUCTION POUR FIBRE OPTIQUE

(30) Priority: 06.03.2014 JP 2014044350
(43) Date of publication of application: 11.01.2017
(73) Proprietor: Furukawa Electric Co. Ltd., Tokyo 100-8322 (JP)
(72) Inventor: GONDA, Tomohiro, Tokyo 100-8322 (JP); MIYABE, Ryo, Tokyo 100-8322 (JP); IMAMURA, Katsunori, Tokyo 100-8322 (JP); SAITO, Tsunetoshi, Tokyo 100-8322 (JP); SUGIZAKI, Ryuichi, Tokyo 100-8322 (JP)
(74) Representative: Schwabe - Sandmair - Marx
(86) International application number: PCT/JP2015/053858
(87) International publication number: WO 2015/133239

(56) References cited:
- JP-A- H0 930 823
- JP-A- 2003 313 041
- JP-A- 2005 053 756
- JP-A- 2009 221 085

## Description

### Field

The present invention relates to a production method of an optical fiber preform and a production method of an optical fiber.

### Background

Conventionally, a drilling method is known as a method of making holes on a glass preform in a production step of a multi-core fiber preform or the like (see, for example, Patent Literature 1). In the drilling method, a column-shaped glass preform is drilled to form a through hole extending in a longitudinal direction of the glass preform by drilling operation.

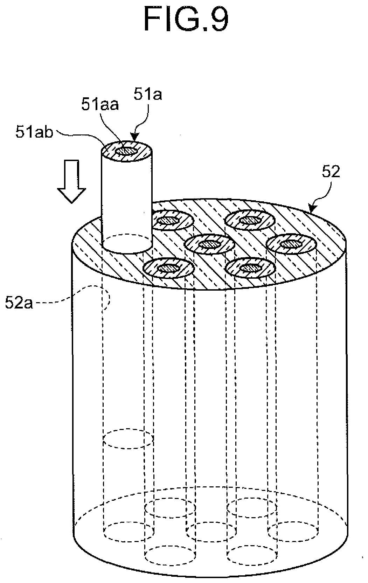

FIG. 9 is a drawing for explaining a production method of a multi-core fiber preform using the drilling method. In the production method of the multi-core fiber preform using the drilling method, to start with, a plurality of core preforms and a cladding preform 52 in which a plurality of through holes are formed by the drilling method are prepared. After that, as illustrated in FIG. 9, a core preform 51a is inserted through a through hole 52a of the cladding preform 52. The core preform 51a includes a core portion 51aa and a cladding portion 51ab formed on an outer periphery of the core portion 51aa. A refractive index of the cladding portion Slab is lower than that of the core portion 51aa. The core preforms are inserted into other through holes similarly. Then, an assembled preform is heated and integrated to produce a multi-core fiber preform having seven cores. Moreover, a multi-core fiber can be produced by drawing this multi-core fiber preform by a drawing furnace.

### Citation List

### Patent Literature

Patent Literature 1: Japanese Laid-open Patent Publication No. 09-090143 JP-A-2003313041 discloses a method for manufacturing a photonic crystal fiber preform comprising forming through holes into silica disks members, stacking a plurality of disk members with matching through holes, optionally inserting guide tubes into the through holes, and sintering the preform.

### Summary

### Technical Problem

However, in the production method of the multi-core fiber preform using the drilling method, in order to form a long through hole by drilling, a positioning accuracy of through holes may be lowered. For example, the through holes are obliquely formed. When the positioning accuracy of the holes is lowered, an accuracy of position of the core portion may be lowered as well. In addition, it might be necessary to prepare a drill capable of forming a long through hole. For those reasons, the drilling method had a problem that it is difficult to produce a multi-core fiber preform in which a long core portion is arranged highly accurately.

The present invention has been made in view of the above and an object of the present invention is to provide a production method being capable of producing, at a low cost, an optical fiber preform and an optical fiber in which a long core portion is arranged highly accurately.

### Solution to Problem

To solve the above-described problem and achieve the object, a production method of an optical fiber preform according to the present invention includes: a preparatory step of preparing: a plurality of bar-shaped first preforms; and a plurality of second preforms including through holes having substantially same shape with a shape of outer periphery of a cross section of the first preform, the cross section being orthogonal to a major axis of the first preform; and an assembly step of matching the through holes of the second preforms to make communication holes, and inserting, through each of the communication holes, at least two of the first preforms arranged side by side in a direction of the major axis such that the second preforms and the first preforms are fitting each other. In at least one position in the direction of the major axis of the communication holes, a position where the second preforms contact with each other differs from a position where the first preforms contact with each other.

Moreover, in the above-described production method of the optical fiber preform according to the present invention, the first preform is a core preform including: a core portion; and a cladding portion formed on an outer periphery of the core portion and having lower refractive index than the core portion, and the second preform is a cladding preform having lower refractive index than the core portion.

Moreover, in the above-described production method of the optical fiber preform according to the present invention, a length of the through holes of the second preforms in an extending direction is equal to or less than 35 times a diameter of the through hole.

Moreover, the above-described production method of the optical fiber preform according to the present invention further includes an integrating step of heating and integrating a preform formed at the assembly step.

Moreover, in the above-described production method of the optical fiber preform according to the present invention, a clearance between the first preform and the through hole is equal to or less than 0.7 mm.

Moreover, a production method of an optical fiber according to the present invention includes: producing an optical fiber preform by the above-described production method; and heating, fusing and drawing the optical fiber preform.

### Advantageous Effects of Invention

According to the present invention, a production method capable of producing an optical fiber preform and an optical fiber in which a long core portion is arranged highly accurately can be achieved at a low cost.

### Brief Description of Drawings

FIG. 1 is a flowchart of a production method of an optical fiber preform and an optical fiber according to an embodiment.
FIG. 2 is a schematic view explaining a preparatory step.
FIG. 3 is a schematic view explaining a cladding-preform-stacking step.
FIG. 4 is a schematic view explaining a core-preform-inserting step.
FIG. 5 is a schematic view explaining a drawing step.
FIG. 6 is a drawing for explaining a production method of a multi-core fiber preform and a multi-core fiber according to a modified example 1.
FIG. 7 is a drawing for explaining production methods of a multi-core fiber preform and a multi-core fiber according to a modified example 2.
FIG. 8 is a drawing for explaining production methods of a multi-core fiber preform and a multi-core fiber according to a modified example 3.
FIG. 9 is a drawing for explaining a production method of a multi-core fiber preform using the drilling method.

### Description of Embodiments

Hereafter, an embodiment of a production method of an optical fiber preform and a production method of an optical fiber according to the present invention will be explained in detail with reference to the drawings. The present invention is not limited to this embodiment. In all the drawings, identical or corresponding elements are given same reference numerals appropriately. Moreover, it should be noted that the drawings show schematic examples. Accordingly, a relationship between respective elements may be different from real values. Among the drawings, there may be parts where the relationships and ratios of the illustrated sizes are different from each other.

### (Embodiment)

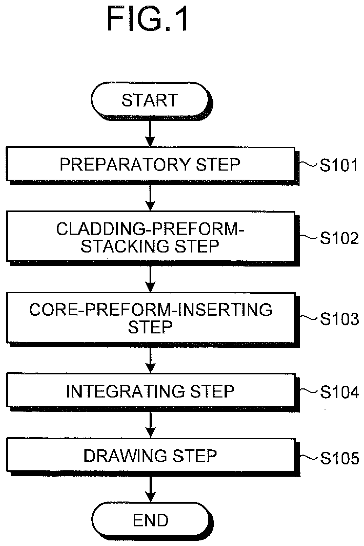

To start with, a production method of an optical fiber preform and a production method of an optical fiber according to an embodiment of the present invention will be explained. FIG. 1 is a flowchart of production methods of an optical fiber preform and an optical fiber according to the embodiment. As illustrated in FIG. 1, the production method of the optical fiber preform according to the present embodiment includes a preparatory step (step S101), a cladding-preform-stacking step (step S102) and a core-preform-inserting step (step S103) as assembly steps, and an integrating step (step S104). In addition to the above-described steps S101 to S104, the production method of the optical fiber according to the present embodiment further includes a drawing step (step S105).

In the production method of the optical fiber preform according to the present embodiment, at first, the preparatory step is performed in which core preforms and a cladding preform are prepared. The core preforms include a plurality of bar-shaped first preforms, and the cladding preform includes a plurality of second preforms provided with a plurality of through holes having substantially the same outer periphery shapes of a cross section orthogonal to major axes of the core preforms. Then, the cladding-preform-stacking step is performed in which the cladding preforms are stacked so that each of the through holes of the prepared cladding preforms matches with each other to form the communication holes. Moreover, the core-preform-inserting step is performed in which each of the core preforms is inserted through each of the communication holes of the stacked cladding preforms so that at least two of the first preforms are arranged in the major axis direction. Then, the integrating step is performed in which the assembled preforms are heated to be integrated. Hereby an optical fiber preform having the plurality of cores extending in the axial direction is produced.

Moreover, in the production method of the optical fiber according to the present embodiment, the drawing step is performed in which the optical fiber preform produced in the steps of the step S101 to S104 is drawn. Hereby, an optical fiber having a plurality of cores extending in the axial direction is produced. The integrating step S104 may be omitted, and alternatively, an integrating and drawing may be performed simultaneously at the drawing step S105.

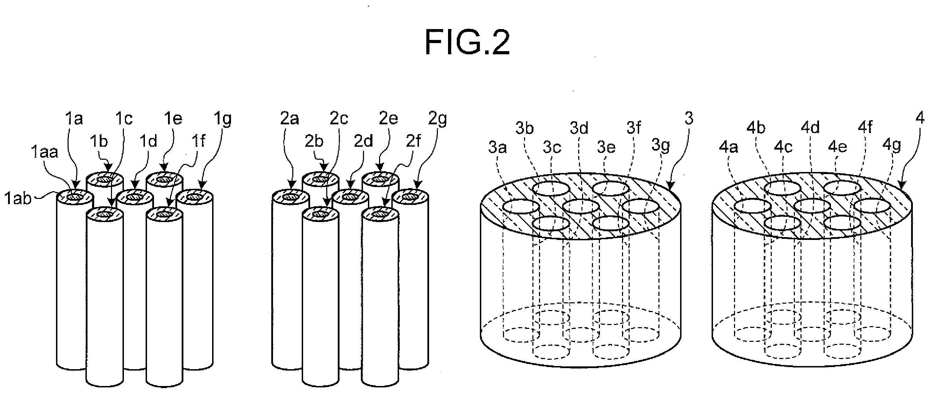

Hereafter, each step will be explained specifically with reference to the production methods of a multi-core fiber preform and a multi-core fiber as examples. To start with, the preparatory step will be explained. FIG. 2 is a schematic view explaining the preparatory step. In the preparatory step, as illustrated in FIG. 2, core preforms 1a to 1g and 2a to 2g and cladding preforms 3 and 4 are prepared. The core preform 1a includes a core portion 1aa and a cladding portion 1ab which is formed on an outer periphery of the core portion 1aa and of which refractive index is lower than that of the core portion 1aa. Similarly to the core preform 1a, the core preforms 1b to 1g and 2a to 2g includes core portions and cladding portions. Refractive indices of the cladding preforms 3 and 4 are lower than that of the core portion, and the cladding preforms 3 and 4 include seven through holes 3a to 3g and seven through holes 4a to 4g of which cross sections are approximately identical to cross sections being orthogonal to the major axes of the core preforms 1a to 1g and 2a to 2g. The core preforms 1a to 1g and 2a to 2g are longer than the cladding preforms 3 and 4.

The core preforms 1a to 1g and 2a to 2g are produced by using well-known methods such as a vapor phase axial deposition (VAD) method, an outside vapor deposition (OVD) method, a modified chemical vapor deposition (MCVD) method and the like.

Hereafter, a method of producing the cladding preforms 3 and 4 will be explained. To start with, a column-shaped glass preform made of silica glass produced by using a well-known method such as the VAD method, the OVD method, the MCVD method, a powder modeling method and the like is produced. This glass preform is drilled by using drilling operation to form the plurality of the through holes 3a to 3g and 4a to 4g extending in the longitudinal direction of the glass preform. Then, inner surfaces of the through holes 3a to 3g and 4a to 4g thus formed are cleaned and subjected to optical polish. The cladding preforms 3 and 4 are produced as explained above. The optical polish may not be necessary. The cladding preforms 3 and 4 may be formed in which the through holes 3a to 3g and 4a to 4g are formed in advance by powder modeling method and the like.

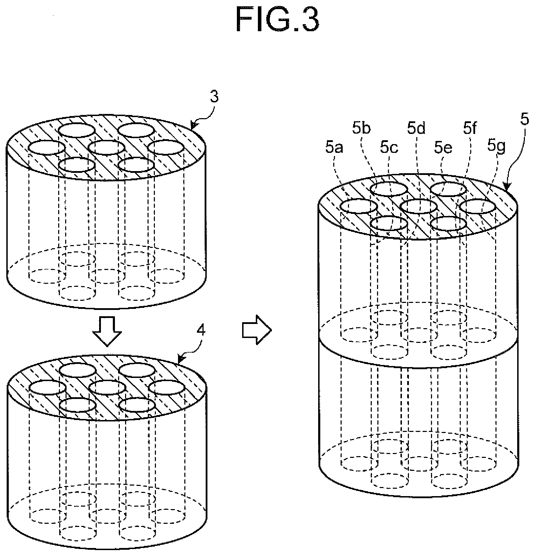

Hereafter the cladding-preform-stacking step will be explained. FIG. 3 is a schematic view explaining the cladding-preform-stacking step. In the cladding-preform-stacking step, as illustrated in FIG. 3, the cladding preform 3 and the cladding preform 4 are stacked so that the seven through holes 3a to 3g and the seven through holes 4a to 4g match to each other respectively to form a preform 5. As a result, the preform 5 is provided with seven communication holes 5a to 5g formed by making the seven through holes 3a to 3g and the seven through holes 4a to 4g of the two cladding preforms 3 and 4 match respectively.

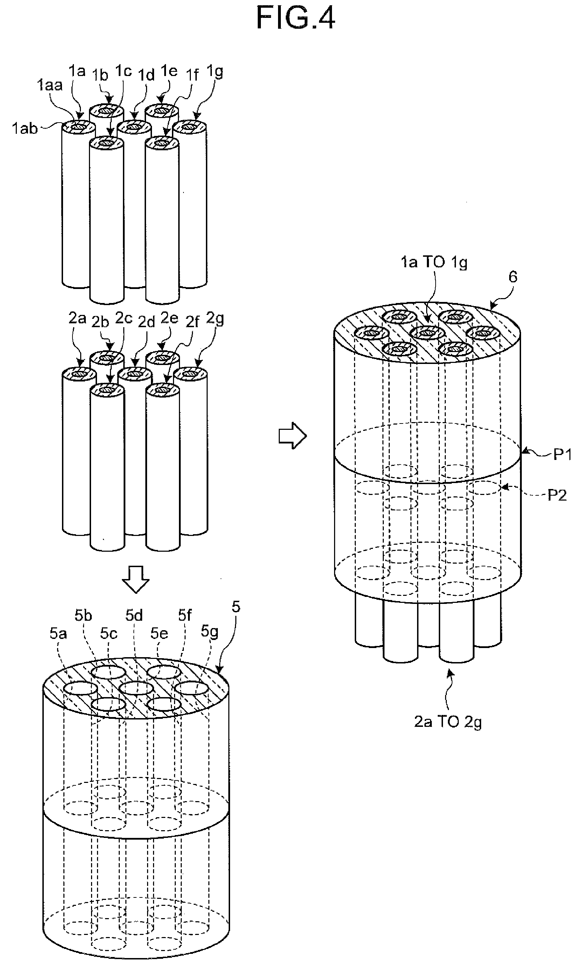

Hereafter the core-preform-inserting step will be explained. FIG. 4 is a schematic view explaining the core-preform-inserting step. In the core-preform-inserting step, as illustrated in FIG. 4, the core preforms 1a to 1g and 2a to 2g are inserted through the communication holes 5a to 5g of the preform 5 respectively to form a preform 6. In this state, the core preform 1a and the core preform 2a are inserted through the communication hole 5a so that the core preform 1a and the core preform 2a are aligned in the major axis direction. Similarly, the core preform 1b and the core preform 2b, the core preform 1c and the core preform 2c, the core preform 1d and the core preform 2d, the core preform 1e and the core preform 2e, the core preform 1f and the core preform 2f, and the core preform 1g and the core preform 2g are inserted through the communication holes 5b to 5f respectively so that the core preform 1b and the core preform 2b, the core preform 1c and the core preform 2c, the core preform 1d and the core preform 2d, the core preform 1e and the core preform 2e, the core preform 1f and the core preform 2f, and the core preform 1g and the core preform 2g are aligned in the major axis direction respectively.

Herein since the core preforms 1a to 1g and the core preforms 2a to 2g are longer than the cladding preforms 3 and 4, when aligning them at an end portion of the preform 6 in the major axis direction, a position P1 at which the cladding preform 3 contacts the cladding preform 4 differs from a position P2 at which the core preforms 1a to 1g contact the core preforms 2a to 2g respectively in the major axis direction. The core preforms 2a to 2g protrude from the other end portion of the preform 6.

It is preferable that a distance between the position P1 at which the cladding preform 3 contacts the cladding preform 4 and the position P2 at which the core preforms 1a to 1g contact the core preforms 2a to 2g respectively and in the major axis direction be a distance being equal to or greater than 15% of an outer diameter of the preform 6. Hereby it is possible to align both of them very precisely and to maintain both of them in a standing state stably.

Hereafter the integrating step will be explained. In the integrating step, the preform 6 is heated by using, for example, a heating furnace and sealing (collapsing) gaps among the core preforms 1a to 1g and 2a to 2g and the cladding preforms 3 and 4 configuring the preform 6 to integrate them. As described above, the multi-core fiber preform having the plurality of cores extending in the axial direction is produced. As described previously, the integrating step may be omitted, and alternatively, integrating and drawing may be performed simultaneously at the drawing step which will be explained next.

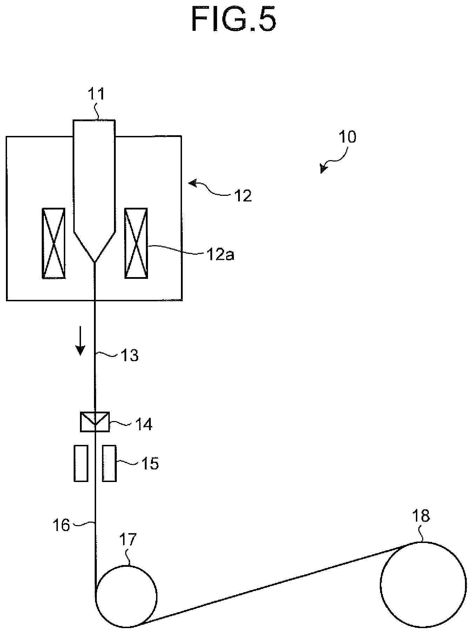

Hereafter, the drawing step will be explained. FIG. 5 is a schematic view explaining the drawing step. In the drawing step, as illustrated in FIG. 5, a multi-core-fiber preform 11 obtained at the integrating step is drawn by using a production device 10.

To start with, the multi-core-fiber preform 11 is set in a drawing furnace 12 of the production device 10 and one of its ends is heated and fused by a heater 12a inside the drawing furnace 12 to draw a glass optical fiber 13 downwardly in the vertical direction. Then, a UV curable resin is applied to a surface, at an outer periphery, of the glass optical fiber 13 by a coating device 14 and then, a ultraviolet ray is irradiated by a ultraviolet irradiation device 15 to make the applied UV curable resin be cured, and thus a coated multi-core fiber 16 is obtained. A guide roller 17 guides the multi-core fiber 16 to a winder 18, the winder 18 winds up the multi-core fiber 16 with a bobbin. Hereby the multi-core fiber 16 is produced.

A tapered portion, an outer diameter of which spliced portion is substantially identical to that of the multi-core-fiber preform 11, may be spliced to an starting end of drawing of the multi-core-fiber preform 11 prior to setting the multi-core-fiber preform 11 at the production device 10. Hereby it is possible to reduce a production loss when starting the drawing and to use a greater portion of the assembled preform as a product portion.

Herein, in the production method of the multi-core fiber preform and the production method of the multi-core fiber according to the present embodiment, the two cladding preforms 3 and 4 are stacked. By stacking the cladding preforms 3 and 4 as described above, it is possible to decrease lengths of the through holes 3a to 3g and 4a to 4g formed by the drilling method more than in a case of a single cladding preform. Herein, in the drilling method, when a length of a through hole to be formed is shorter, it is possible to drill a through hole being very precise in position and shape. Therefore, a multi-core fiber preform and a multi-core fiber of which core portions are very precise in position can be produced by the production method according to the present embodiment. Moreover, since the plurality of cladding preforms 3 and 4 are stacked in the production method according to the present embodiment, a multi-core fiber preform and a multi-core fiber being longer than that in a case of singular cladding preform can be produced. Therefore, it is possible to produce a multi-core fiber preform and a multi-core fiber being greater in length and very precise in positions of core portions by the production method according to the present embodiment.

A positioning accuracy of a through hole can be sufficiently precise if a length of the through hole is, for example, equal to or less than 35 times a diameter of the through hole. This can be achieved easily by making a length in a drilling direction and of a through hole of a columnar glass preform to become the cladding preform being prepared be equal to or less than 35 times the diameter of the through hole. By stacking the two or more cladding preforms, it is possible to decrease a length of a through hole to be drilled or to increase lengths of a multi-core fiber preform and a multi-core fiber to be produced.

Since the core preforms 1a to 1g and 2a to 2g are continuous in the longitudinal direction in the production method according to the present embodiment, production loss is not produced at a contact portion of core preforms.

In the production method according to the present embodiment, the position P1 where the cladding preform 3 and the cladding preform 4 contact with each other and the position P2 where the core preforms 1a to 1g contact the core preforms 2a to 2g respectively differ in at least one point in the major axis directions of the communication holes 5a to 5g. As a result, the core preforms 1a to 1g and 2a to 2g and the cladding preforms 3 and 4 having the seven through holes 3a to 3g and the seven through holes 4a to 4g fit each other, positional relationships relative to counterparts match very precisely. Therefore, a multi-core fiber preform and a multi-core fiber of which core portions are very precise in position can be produced by the production method according to the present embodiment.

In order to produce a multi-core fiber preform and a multi-core fiber of which core portions are very precise in position, it is preferable that clearances (widths of gaps) among the core preforms 1a to 1g and 2a to 2g and the through holes 3a to 3g and 4a to 4g be equal to or less than 0.7 mm.

### (Modified Example 1)

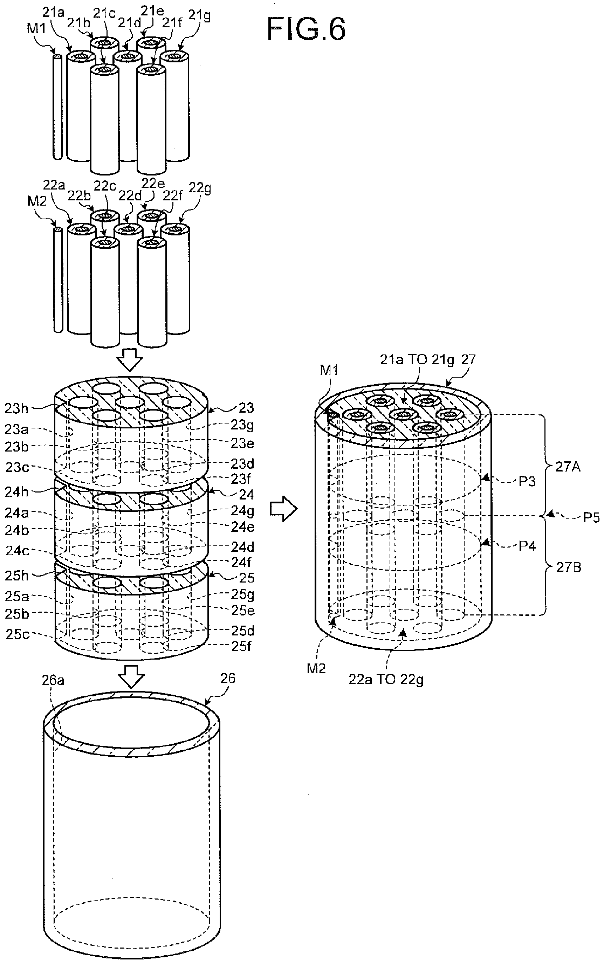

Hereafter, a production method of an optical fiber preform and a production method of an optical fiber according to a modified example 1 of the embodiment of the present invention will be explained with reference to the production methods of a multi-core fiber preform and a multi-core fiber being examples. FIG. 6 is a drawing for explaining the production methods of the multi-core fiber preform and the multi-core fiber according to the modified example 1. As illustrated in FIG. 6, prepared in the preparatory step of the production method according to the modified example 1 are seven core preforms 21a to 21g, seven core preforms 22a to 22g, two markers M1 and M2, three cladding preforms 23, 24 and 25 provided with seven through holes 23a to 23g, seven through holes 24a to 24g, and seven through holes 25a to 25g respectively, and a pipe 26 provided with a hole 26a being approximately identical in shape to outer peripheries of the cladding preforms 23, 24 and 25.

The core preforms 21a to 21g and 22a to 22g are longer than the cladding preforms 23, 24 and 25. The marker M1 is identical to the core preforms 21a to 21g in length, and the marker M2 is identical to the core preforms 22a to 22g in length. The two markers M1 and M2 are made of a glass material of which refractive indices are different from those of the cladding preforms 23, 24 and 25. The two markers M1 and M2 may be identical in refractive index, and alternatively may be different from each other in refractive index or in refractive index profile. The two markers M1 and M2 may be made of colored glasses. In this case, the markers M1 and M2 may be the same, or may be different from each other, in color.

The cladding preforms 23, 24 and 25 have grooves 23h, 24h and 25h respectively formed at outer peripheries, and in the longitudinal directions, of the cladding preforms 23, 24 and 25. The grooves 23h, 24h and 25h, being V-letter-shaped in the present modified example 1 may not be limited to a specific shape and may be U-letter-shaped. The pipe 26 is made of a material that is identical to those of the cladding preforms 23, 24 and 25.

In the assembly step, the three cladding preforms 23, 24 and 25 are inserted through the pipe 26 and the through holes 23a to 23g, 24a to 24g, and 25a to 25g are made match with each other to form communication holes, and then, the core preforms 21a to 21g and 22a to 22g are inserted through those communication holes. In this state, similarly to the case of the embodiment 1, the through holes 23a, 24a, 25a communicate in the thus formed communication holes so that, for example, the core preform 21a and the core preform 22a are arranged in the major axis direction. In this state, the grooves 23h, 24h and 25h become communication grooves as well. The markers M1 and M2 are inserted through, and arranged in, holes formed by these communication grooves and an inner wall of the pipe 26. For this purpose, outer diameters of the markers M1 and M2 and sizes of the grooves 23h, 24h and 25h are set so that the markers M1 and M2 can be inserted through the holes formed by the grooves and the inner wall of the pipe 26. The insertion is performed in orders of, for example, the core preform 21a and the marker M1 being paralleled and the core preform 22a and the marker M2 being paralleled.

Hereby a preform 27 is formed.

Moreover, when positions, of the core preforms 21a to 21g and the core preforms 22a to 22g, at one of ends of the preform 27 are aligned, a position P3 at which the cladding preform 23 contacts the cladding preform 24 or a position P4 at which the cladding preform 24 contacts the cladding preform 25 differs in the major axis direction from a position P5 at which the core preforms 21a to 21g contact the core preforms 22a to 22g respectively.

After that, similarly to the embodiment, the integrating step integrating the core preforms 21a to 21g and 22a to 22g, the cladding preforms 23, 24 and 25, the pipe 26, and the markers M1 and M2 is performed to produce the multi-core fiber preform. Then, the produced multi-core fiber preform is drawn at the drawing step similarly to the embodiment to produce the multi-core fiber. The integrating step may be omitted, and alternatively, the integrating and the drawing may be performed simultaneously at the drawing step.

Herein, in the production method according to the present modified example 1, the position P3 at which the cladding preform 23 contacts the cladding preform 24 or the position P4 at which the cladding preform 24 contacts the cladding preform 25 differs in the major axis direction from the position P5 at which the core preforms 21a to 21g contact the core preforms 22a to 22g respectively. As a result, the core preforms 21a to 21g and 22a to 22g and the cladding preforms 23, 24 and 25 fit with each other, positional relationships relative to counterparts match very precisely. Therefore, the multi-core fiber preform and the multi-core fiber of which positional relationships relative to counterparts match very precisely can be produced by the production method according to the present modified example 1.

In the production method of the multi-core fiber preform and in the production method of the multi-core fiber according to the present modified example 1, the three cladding preforms 23, 24 and 25 are stacked. As described above, by stacking the cladding preforms 23, 24 and 25, it is possible to decrease the lengths of the through holes 23a to 23g, 24a to 24g, and 25a to 25g formed by the drilling method more than in the case of the single cladding preform. Therefore, the multi-core fiber preform and the multi-core fiber of which core portions are very precise in position can be produced by the production method according to the present modified example 1. Since the plurality of cladding preforms 23, 24 and 25 are stacked in the production method according to the present modified example 1, the multi-core fiber preform and the multi-core fiber being longer than that in the case of singular cladding preform can be produced. Therefore, it is possible to produce the multi-core fiber preform and the multi-core fiber being greater in length and very precise in positions of core portions by the production method according to the present modified example 1.

Moreover, since the pipe 26 in addition to the core preforms 21a to 21g and 22a to 22g conducts positioning of the cladding preforms 23, 24 and 25 in the production method according to the present modified example 1, the more precise multi-core fiber preform and the more precise multi-core fiber can be produced. A plurality of pipes may be overlapped in the longitudinal direction of the core preform. Hereby, the longer multi-core fiber preform and the longer multi-core fiber can be produced. In this state, the position P3 at which the cladding preform 23 and the cladding preform 24 contact each other or the position P4 at which the cladding preform 24 and the cladding preform 25 contact each other may differ from a position at which the two pipes contact each other at at least a point in the direction in which the communication hole extends. As a result, the cladding preforms 23, 24 and 25 and the two pipes fit each other, positional relationships relative to counterparts match very precisely.

In the production method according to the present modified example 1, the markers M1 and M2 are inserted through the cladding preform. When observing a cross section of the produced multi-core fiber preform or the produced multi-core fiber in this state visually, by a microscope or the like, the markers M1 and M2 can be detected of which refractive indices are different from that of the cladding preform in the multi-core fiber preform or the multi-core fiber. Herein, the marker M1 extends to a position that is identical to those of the core preforms 21a to 21g and by identical lengths, and is disposed at an area 27A of the preform 27. The marker M2 extends to a position that is identical to those of the core preforms 22a to 22g and by identical lengths, and is disposed at an area 27B of the preform 27. Therefore, if the refractive indices or the refractive index profiles of the markers M1 and M2 are made different from each other, it is possible to confirm as to whether a multi-core fiber has been drawn from the core preforms 21a to 21g or from the core preforms 22a to 22g at the position, in the longitudinal direction, of the multi-core fiber of which cross section is observed. Therefore, when a defect product is produced in a production process by some reasons, it is possible to confirm as to whether the core preforms 21a to 21g cause the defect or the core preforms 22a to 22g cause the defect and make use of the confirmation in future production steps and future products.

### (Modified Example 2)

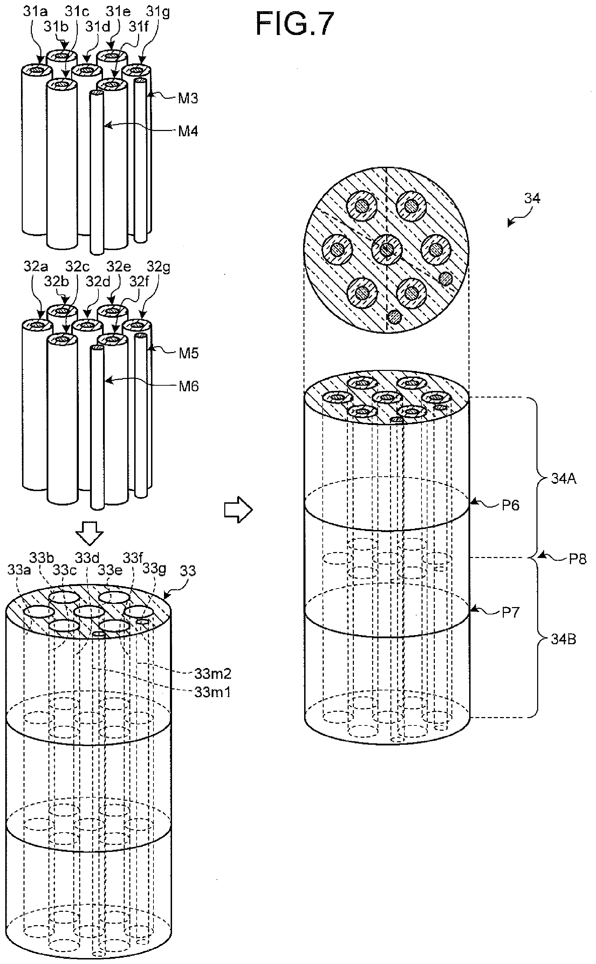

Hereafter, a production method of an optical fiber preform and a production method of an optical fiber according to a modified example 2 according to the embodiment of the present invention will be explained with reference to the production methods of a multi-core fiber preform and a multi-core fiber being examples. FIG. 7 is a drawing for explaining the production methods of the multi-core fiber preform and the multi-core fiber according to the modified example 2. As illustrated in FIG. 7, prepared in the preparatory step of the production method according to the modified example 2 are fourteen core preforms 31a to 31g and 32a to 32g, four markers M3 to M6, and three cladding preforms provided with seven through holes similarly to the case of the modified example 1 and a through hole for the two markers. Herein, the markers M3 and M6 are made of glass materials being different in refractive index from that of the cladding preform. On the other hand, the markers M4 and M5 are made of materials being identical in refractive index to that of the cladding preform.

Then, in the assembly step, the cladding-preform-stacking step is performed at which, to start with, the three cladding preforms are stacked to become a preform 33. The preform 33 in this state is provided with seven communication holes 33a to 33g formed by each of seven through holes of each of the three cladding preforms for the core preform being matched and with two communication holes 33ml and 33m2 formed by each of two through holes for markers of each for the three cladding preforms being matched. Then, the core-preform-inserting step is performed in which the core preforms 31a to 31g and 32a to 32g are inserted through the communication holes 33a to 33g of the preform 33 respectively, and moreover, the markers M3 to M6 are inserted through, and arranged in, the communication holes 33m1 and 33m2 of the preform 33 respectively to obtain a preform 34. Herein, when aligning the core preforms 31a to 31g and the core preforms 32a to 32g at an end portion of the preform 34 in the major axis direction, a position P6 or P7 at which the two cladding preforms contact differs in the major axis direction from a position P8 at which the core preforms 31a to 31g contact the core preforms 32a to 32g respectively. After that, similarly to the embodiment, the integrating step integrating the core preforms 31a to 31g and 32a to 32g, the markers M3 to M6, and the cladding preforms is performed to produce the multi-core fiber preform. Then, the produced multi-core fiber preform is drawn at the drawing step similarly to the embodiment to produce the multi-core fiber. The integrating step may be omitted, and alternatively, the integrating and the drawing may be performed simultaneously at the drawing step.

Herein, in the production method according to the present modified example 2, the position P6 or P7 at which the two cladding preforms contact differs in the major axis direction from the position P8 at which the core preforms 31a to 31g contact the core preforms 32a to 32g respectively. As a result, the core preforms 31a to 31g and 32a to 32g and the three cladding preforms fit each other, positional relationships relative to counterparts match very precisely. Therefore, it is possible to produce the multi-core fiber preform and the multi-core fiber being very precise in positions of core portions by the production method according to the present modified example 2.

In the production method of the multi-core fiber preform and the production method of the multi-core fiber according to the present modified example 2, the three cladding preforms are stacked similarly to the modified example 1. Therefore, it is possible to produce the multi-core fiber preform and the multi-core fiber being very precise in positions of core portions by the production method according to the present modified example 2 similarly to the present modified example 2. Moreover, since the plurality of cladding preforms are stacked in the production method according to the present modified example 2, it is possible to produce the multi-core fiber preform and the multi-core fiber being greater in length and very precise in positions of core portions similarly to the modified example 1.

Moreover, in the production method according to the present modified example 2, the markers M3 to M6 are inserted through the cladding preforms. When observing a cross section of the produced multi-core fiber preform or the produced multi-core fiber in this state visually, by a microscope or the like, the marker M3 or the marker M6 can be detected of which refractive index is different from that of the cladding preform in the multi-core fiber preform or the multi-core fiber. On the other hand, since the refractive indices of the markers M4 and M5 are identical to that of the cladding preforms, thus the markers M4 and M5 become invisible. Herein the marker M3 extends at a position and by a length that are identical to those of the core preforms 31a to 31g and is disposed at an area 34A of the preform 34. Moreover, the marker M6 extends at a position and by a length that are identical to those of the core preforms 32a to 32g and is disposed at an area 34B of the preform 34. As a result, similarly to the case of the modified example 1, it is possible to confirm as to whether a multi-core fiber has been drawn from the core preforms 31a to 31g or from the core preforms 32a to 32g at the position, in the longitudinal direction, of the multi-core fiber of which cross section is observed and from a position of the marker in the observed cross section. Therefore, when a defect product is produced in a production process by some reasons, it is possible to confirm as to whether the core preforms 21a to 21g cause the defect or the core preforms 22a to 22g cause the defect and make use of the confirmation in future production steps and future products. In the cross section being orthogonal to the major axis direction of the preform 34 as indicated by a broken line in FIG. 7, the position of the marker in the cross section of the preform 34 may be offset from a symmetry axis passing through the center of the preform 34 with reference to arrangement of the core preform. In this case, a specific direction around a periphery of the multi-core fiber can be identified and the position of each of the core members can be identified more reliably.

The refractive indices or the refractive index profiles of the marker M3 and the marker M6 may be differed, or alternatively their arrangements may be differed. Even if the produced multi-core fiber is rotated in this case, it is possible to identify as to whether it is a portion corresponding to the core preforms 31a to 31g or a portion corresponding to the core preforms 32a to 32g easily, thus it is preferable. For making arrangements be different from each other, there are methods of making distances from the center of the multi-core fiber be different, making distances from the nearest core be different, or the like.

The marker M4 and the marker M3 may be made of glass materials having refractive indices that are different from that of the cladding preform. Particularly, by making the marker M3 and the marker M4 be different from the marker M5 and the marker M6 respectively in refractive index or in refractive index profile from each other, even if the produced multi-core fiber is rotated, it is possible to identify as to whether it is a portion corresponding to the core preforms 31a to 31g or a portion corresponding to the core preforms 32a to 32g easily.

Although, in the present modified example 1, only one marker is observed in the cross section being orthogonal to the major axis direction of the preform 34, two or three markers may be disposed so that symmetry of their arrangements is low. In this case, the specific direction around the periphery of the multi-core fiber can be identified more easily, and when cutting the multi-core fiber and two cross sections are produced, it is possible to identify easily as to at which side the cross section is at (for example, as to whether it is at an upstream side or a downstream side relative to the direction of an optical communication).

Moreover, the marker M4's side and the marker M6's side may be replaced by three markers being identical in length to the cladding preform to make it a position at which the markers contact to each other and make it a position at which the cladding preforms contact each other. In this case, the markers become length markers for the cladding preform, and thus it is possible as well to identify as to which of the core members and which of the cladding members.

### (Modified Example 3)

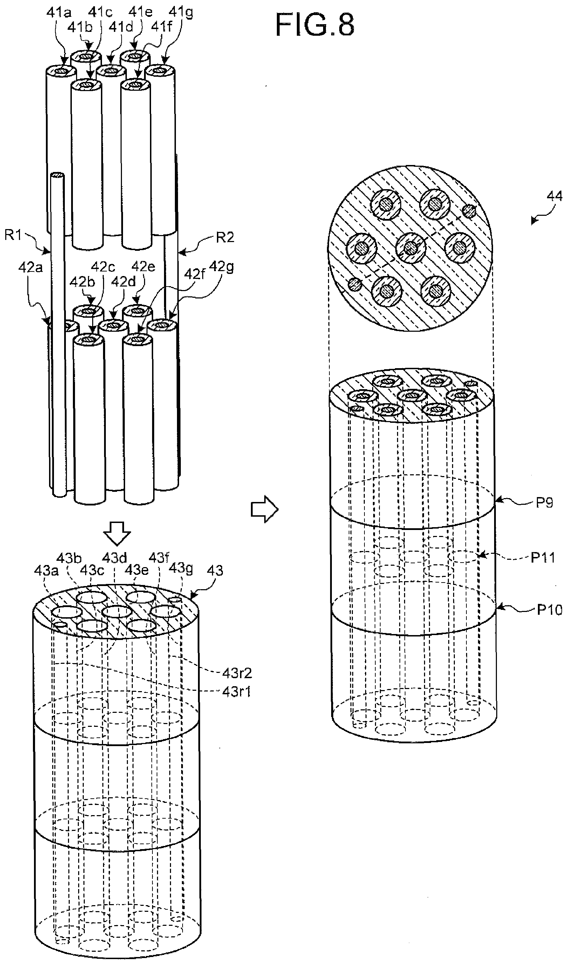

Hereafter, a production method of an optical fiber preform and a production method of an optical fiber according to a modified example 3 of the embodiment of the present invention will be explained with reference to the production methods of a multi-core fiber preform and a multi-core fiber being examples. FIG. 8 is a drawing for explaining production methods of a multi-core fiber preform and a multi-core fiber according to a modified example 3. As illustrated in FIG. 8, prepared in a preparatory step of the production method of the present modified example 3 are fourteen core preforms 41a to 41g and 42a to 42g, two rods R1 and R2 for positioning, and three cladding preforms provided with seven through holes for a core preform and two through hole for a rod. Herein, the rods R1 and R2 being a plurality of bar-shaped members are made of glass material of which refractive index is identical to that of the cladding preform. The rods R1 and R2 have a length being identical to twice the length of the core preform and has a length being identical to three times the length of the cladding preform. The three cladding preforms are provided with a plurality of through holes which are approximately identical in shape to a cross section being orthogonal to the major axes of the rods R1 and R2.

After that, in the assembly step, to start with, the cladding-preform-stacking step is performed to stack the three cladding preforms to obtain a preform 43. The preform 43 in this state is provided with seven communication holes 43a to 43g formed by matching the seven through holes for the core preform of each of the three cladding preforms, and is further provided with two communication holes 43R1 and 43R2 formed by matching the two through holes for the rod of each of the three cladding preforms. Then, the rods R1 and R2 are inserted through the communication holes 43R1 and 43R2 of the preform 43 respectively to make positional relationships between the rods R1 and R2 and the communication holes 43R1 and 43R2 of the preform 43 match very precisely. As a result, the seven through holes for the core preform of each of the three cladding preform as well are matched more precisely. After that, the core-preform-inserting step is performed at which the core preforms 41a to 41g and 42a to 42g are inserted through the communication holes 43a to 43g of the preform 43 respectively to obtain a preform 44. In this state, a position P9 or P10 at which the two cladding preforms contact differ in the major axis direction from a position P11 at which the core preforms 41a to 41g contact the core preforms 42a to 42g respectively. After that, the integrating step integrating the core preforms 41a to 41g and 42a to 42g, the rods R1 and R2, and the cladding preform is performed similarly to the embodiment to produce the multi-core fiber preform. Then, the produced multi-core fiber preform is drawn at the drawing step similarly to the embodiment to produce the multi-core fiber. The integrating step may be omitted, and alternatively, the integrating and the drawing may be performed simultaneously at the drawing step.

Herein, in the production method according to the present modified example 3, the position P9 or P10 at which the two cladding preforms contact differs in the major axis direction from a position P11 at which the core preforms 41a to 41g contact the core preforms 42a to 42g respectively. As a result, the core preforms 41a to 41g and 42a to 42g and the three cladding preforms fit each other, positional relationships relative to counterparts match very precisely. Therefore, it is possible to produce the multi-core fiber preform and the multi-core fiber being very precise in positions of core portions by the production method according to the present modified example 3.

In the production method of the multi-core fiber preform and the production method of the multi-core fiber according to the present modified example 3, the three cladding preforms are stacked similarly to the modified examples 1 and 2. Therefore, it is possible to produce the multi-core fiber preform and the multi-core fiber being very precise in positions of core portions similarly to the present modified example 1 by the production method according to the present modified example 3. Moreover, since the plurality of cladding preforms are stacked in the production method according to the present modified example 3, it is possible to produce the multi-core fiber preform and the multi-core fiber being greater in length and very precise in positions of core portions similarly to the modified examples 1 and 2.

Moreover, in the production method according to the present modified example 3, the rods R1 and R2 are inserted through the cladding preforms. Therefore, positions of the through holes of the three cladding preforms can be matched more precisely, the multi-core fiber preform and the multi-core fiber can be produced more precisely. Although positions of the rods R1 and R2 on a cross section of the preform 44 are arranged so as to be centrally symmetric, on a cross section being orthogonal to the major axis direction of the preform 44, on a symmetry axis passing through the center of the preform 44 as illustrated by a broken line in FIG. 8, the positions of the rods may not be limited specifically.

At least one of the rods R1 and R2 being made of a glass material having a refractive index being different from that of the cladding preform may be used as a marker. In this case, if the rod is arranged at a position being offset from the symmetry axis passing through the center of the preform 44, a specific direction around a periphery of the multi-core fiber can be identified and the position of each of the core members can be identified more reliably.

As described above, according to the present embodiment, it is possible to provide the production method of the multi-core fiber preform and the production method of the multi-core fiber being greater in length and very precise in positions of core portions.

The present invention is not limited to the above-described embodiment having been explained with reference to examples of the production method of the multi-core fiber preform and the production method of the multi-core fiber.

For example, a glass capillary can be used in place of the core preform to be applied to a case of producing an optical fiber having holes.

The present invention can be applied to a production methods of an optical fiber preform and an optical fiber such as PANDA-type fiber being produced by combining a bar-shaped preform with a preform provided with a through hole being approximately identical in shape to an outer periphery shape of a cross section being orthogonal to the major axis of the bar-shaped preform.

The present invention is not limited to the cladding-preform-stacking step and the core-preform-inserting step being performed as the assembly step in the above-described embodiment at which the through holes of the plurality of the prepared cladding preforms match respectively to be a plurality of communication holes, and the prepared core preforms are inserted to the communication holes respectively to fit each other. For example, a core preform is inserted through one of the cladding preforms, and after that, the rest of the cladding preforms may be stacked. The cladding preforms may be arranged side by side so that the through holes are horizontal and the through holes of each of the cladding preforms may be matched to become communication holes, then, the core preforms may be inserted through the communication holes.

The present invention is not limited to the above-described embodiment in which the number of the core preforms in each cross section being orthogonal to the longitudinal direction of the core preform was seven, and the number of the core preforms may be at least two or greater. Moreover, in the present invention, arrangements and dimensions of the core preforms and the through holes at each step surface being orthogonal to the longitudinal direction of the core preform are not limited to the above-described embodiment and may be designed arbitrarily.

In the above-described embodiment, the plurality of core preforms may be overlapped in the longitudinal direction of the core preform. In this state, multi-core fibers being different in characteristics can be drawn at a time by changing characteristics such as refractive index profile or the like of the overlapped core preforms.

The present invention is not limited to the above-described method in the above-described embodiment of forming a through hole by drilling a columnar glass preform using drilling operation as a method of forming a through hole to the cladding preform. For example, a through hole may be formed by laser-machining. Alternatively, a through hole may be formed by photolithography and anisotropic etching. A through hole may not be identical in diameter along the longitudinal direction of the core preform.

The present invention is not limited to the integrating step, according to the above-described embodiment, being a step in which the preform is heated by using the heating furnace to integrating respective members. For example, respective members can be integrated by using a well-known method such as anodic matching or the like.

As the integrating step, a collapsing-and-integrating step may be performed at which a core preform and a cladding preform are vacuumed while being heated in advance, and a gap between the core preform and the cladding preform is blocked.

The above-described embodiment embodiments do not limit the present invention. The present invention includes a configuration appropriately combining the above-described elements. Further effects or modification examples can be derived by an ordinary skilled person in the art easily. Therefore, further wide aspects of the present invention are not limited to the specific, detailed, and various modifications may be made.

### Industrial Applicability

As described above, the production method of the optical fiber preform and the production method of the optical fiber according to the present invention are effective in use mainly when producing the multi-core fiber preform and the multi-core fiber being greater in length and very precise in positions of core portions.

### Reference Signs List

1a to 1g, 2a to 2g, 21a to 21g, 22a to 22g, 31a to 31g, 32a to 32g, 41a to 41g, 42a to 42g core preform
1aa core portion
1ab cladding portion
3, 4, 23, 24, 25 cladding preform
3a to 3g, 4a to 4g, 23a to 23g, 24a to 24g, 25a to 25g through hole
5, 6, 27, 33, 34, 43, 44 preform
5a to 5g, 33a to 33g, 33m1, 33m2, 43a to 43g, 43r1, 43r2 communication hole
10 production device
11 multi-core fiber preform
12 drawing furnace
12a heater
13 glass optical fiber
14 coating device
15 UV irradiation device
16 multi-core fiber
17 guide roller
18 winder
23h, 24h, 25h groove
26 pipe
26a hole
27A, 27B, 34A, 34B area
M1 to M6 marker
R1, R2 rod
S101 to S105 step

## Claims

1. A production method of an optical fiber preform, comprising:
a preparatory step of preparing: a plurality of bar-shaped first preforms; and a plurality of second preforms including through holes having substantially same shape with a shape of outer periphery of a cross section of the first preform, the cross section being orthogonal to a major axis of the first preform; and
an assembly step of matching the through holes of the second preforms to make communication holes, and inserting, through each of the communication holes, at least two of the first preforms arranged side by side in a direction of the major axis such that the second preforms and the first preforms are fitting each other, wherein
in at least one position in the direction of the major axis of the communication holes, a position where the second preforms contact with each other differs from a position where the first preforms contact with each other.

2. The production method of the optical fiber preform according to claim 1, wherein
the first preform is a core preform including:
a core portion; and
a cladding portion formed on an outer periphery of the core portion and having lower refractive index than the core portion, and
the second preform is a cladding preform having lower refractive index than the core portion.

3. The production method of the optical fiber preform according to claim 1 or 2, wherein a length of the through holes of the second preforms in an extending direction is equal to or less than 35 times a diameter of the through hole.

4. The production method of the optical fiber preform according to any one of claims 1 to 3, further comprising an integrating step of heating and integrating a preform formed at the assembly step.

5. The production method of the optical fiber preform according to any one of claims 1 to 4, wherein a clearance between the first preform and the through hole is equal to or less than 0.7 mm.

6. A production method of an optical fiber comprising:
producing an optical fiber preform by the production method of any one of claims 1 to 5; and
heating, fusing and drawing the optical fiber preform.

## Patentansprüche

1. Herstellungsverfahren einer Lichtleitfaser-Vorform, umfassend:
einen vorbereitenden Schritt des Herstellens von: einer Vielzahl von stabförmigen ersten Vorformen; und einer Vielzahl von zweiten Vorformen einschließlich Durchgangslöcher mit im Wesentlichen der gleichen Form wie einer Form des äußeren Umfangs eines Querschnitts der ersten Vorform, wobei der Querschnitt orthogonal zu einer Hauptachse der ersten Vorform ist; und
einen Montageschritt des Anpassens der Durchgangslöcher der zweiten Vorformen, um Verbindungslöcher herzustellen, und des Einführens, durch jedes der Verbindungslöcher, von mindestens zwei der ersten Vorformen, die nebeneinander in einer Richtung der Hauptachse angeordnet sind, sodass die zweiten Vorformen und die ersten Vorformen zueinander passen, wobei
in mindestens einer Position in der Richtung der Hauptachse der Verbindungslöcher eine Position, wo die zweiten Vorformen einander berühren, anders als eine Position ist, wo die ersten Vorformen einander berühren.

2. Herstellungsverfahren der Lichtleitfaser-Vorform nach Anspruch 1, wobei
die erste Vorform eine Kern-Vorform ist, einschließlich:
einem Kernabschnitt; und
einem Ummantelungsabschnitt, der an einem äußeren Umfang des Kernabschnitts gebildet ist und einen niedrigeren Brechungsindex hat als der Kernabschnitt und
die zweite Vorform eine Ummantelungs-Vorform ist, die einen niedrigeren Brechungsindex als der Kernabschnitt hat.

3. Herstellungsverfahren der Lichtleitfaser-Vorform nach Anspruch 1 oder 2, wobei eine Länge der Durchgangslöcher der zweiten Vorformen in einer Erstreckungsrichtung gleich wie oder weniger als 35 Mal ein Durchmesser des Durchgangslochs ist.

4. Herstellungsverfahren der Lichtleitfaser-Vorform nach einem der Ansprüche 1 bis 3, ferner umfassend einen Integrationsschritt des Erhitzens und Integrierens einer Vorform, die an dem Montageschritt gebildet wird.

5. Herstellungsverfahren der Lichtleitfaser-Vorform nach einem der Ansprüche 1 bis 4, wobei ein Abstand zwischen der ersten Vorform und dem Durchgangsloch gleich wie oder weniger als 0,7 mm ist.

6. Herstellungsverfahren einer Lichtleitfaser, umfassend:
Herstellen einer Lichtleitfaser-Vorform durch das Herstellungsverfahren nach einem der Ansprüche 1 bis 5; und
Erhitzen, Verschmelzen und Ziehen der Lichtleitfaser-Vorform.

## Revendications

1. Procédé de production de préforme fibre optique, comprenant :
une étape préparatoire, de la préparation : d'une pluralité de premières préformes en forme de barre ; et d'une pluralité de secondes préformes incluant des trous débouchants présentant sensiblement la même forme qu'une forme de périphérie extérieure d'une section transversale de la première préforme, la section transversale étant orthogonale à un grand axe de la première préforme ; et
une étape d'assemblage, de la mise en correspondance des trous débouchants des secondes préformes pour réaliser des trous de communication, et de l'insertion, à travers chacun des trous de communication, d'au moins deux des premières préformes agencées côte à côte dans une direction du grand axe de telle sorte que les secondes préformes et les premières préformes aillent les unes avec les autres, dans lequel
dans au moins une position dans la direction du grand axe des trous de communication, une position où les secondes préformes entrent en contact les unes avec les autres diffère d'une position où les premières préformes entrent en contact les unes avec les autres.

2. Procédé de production de préforme de fibre optique selon la revendication 1, dans lequel
la première préforme est une préforme d'âme incluant :
une portion d'âme ; et
une portion de gaine formée sur une périphérie extérieure de la portion d'âme et présentant un indice de réfraction inférieur à celui de la portion d'âme, et
la seconde préforme est une préforme de gaine présentant un indice de réfraction inférieur à celui de la portion d'âme.

3. Procédé de production de préforme de fibre optique selon la revendication 1 ou 2, dans lequel une longueur des trous débouchants des secondes préformes dans une direction d'extension est égale ou inférieure à 35 fois un diamètre du trou débouchant.

4. Procédé de production de préforme de fibre optique selon l'une quelconque des revendications 1 à 3 comprenant en outre une étape d'intégration, du chauffage et de l'intégration d'une préforme formée à l'étape d'assemblage.

5. Procédé de production de préforme de fibre optique selon l'une quelconque des revendications 1 à 4, dans lequel un espace libre entre la première préforme et le trou débouchant est égal ou inférieur à 0,7 mm.

6. Procédé de production de fibre optique, comprenant :
la production d'une préforme de fibre optique par le procédé de production de l'une quelconque des revendications 1 à 5 ; et
le chauffage, le fusionnement et l'étirage de la préforme de fibre optique.
